# EUROPÄISCHE PATENTANMELDUNG

(11) **EP 1 090 705 A2**
(43) Veröffentlichungstag der Anmeldung: **11.04.2001**
(21) Anmeldenummer: 00121511.0
(22) Anmeldetag: 29.09.2000
(51) Int. Cl.: B23B 31/40, B23C 5/26, B23D 61/02, B27B 5/32

(54) **Werkzeugdorn, insbesondere Fräs- oder Sägedorn**

(30) Priorität: 11.09.2000 DE 10044999; 04.10.1999 DE 19947712
(71) Anmelder: Baumgärtner, Peter, D-73072 Donzdorf (DE)
(72) Erfinder: Baumgärtner, Peter, D-73072 Donzdorf (DE)
(74) Vertreter: Fürst, Siegfried

(57) **Zusammenfassung**

Die Erfindung bezieht sich auf einen neuartigen mehrteiligen Werkzeugdorn, bei dem die Werkzeugstirnfläche nicht von überstehenden Spannelementen beeinträchtigt wird.

## Beschreibung

Die Erfindung bezieht sich nach dem Oberbegriff des Patentanspruches l auf einen Werkzeugdorn, insbesondere Fräs- oder Sägedorn für die Aufnahme eines Werkzeuges, insbesondere einen Scheiben-, eines Walzen-, eines Walzenstirn-, eines Prismen-, eines Winkel-, eines Form- oder eines Satzfräsers oder dgl. materialabtragende Werkzeuge, z.B. ein (Kreis-) Sägeblatt.

Bekannte Fräsdorne, insbesondere Aufsteckfräsdorne, für die Aufnahme rotierender Werkzeuge besitzen ein Maschinenteil und ein Werkzeugteil, welche rotationssymmetrisch zu einer Mittelachse angeordnet und einstückig ausgebildet sind. Die Befestigung/Arretierung des/der auf das Werkzeugteil aufgesteckten Werkzeuge erfolgt mittels einem Spannschraube-Unterleg-/Andruckscheibe-System, welches in eine zentrisch und axial im Werkzeugteil angeordnete Gewindebohrung eingreift und mittels der Unterlegscheibe den Werkzeugkörper gegen eine, im Grenzbereich zwischen dem Werkzeugteil und dem Maschinenteil vorhandenen, Anlage des Fräsdornes, zumindest kraftschlüssig, festsetzt.

Nachteilig an diesem System ist vor allem, dass die Spannschraube zwecks Erzeugung der für das Anziehen benötigten Kräfte sehr stabil (groß dimensioniert) ausgeführt sein muss. Der Schraubenkopf ragt daher über die Stirnseite des Werkzeuges hinaus und gestattet somit nicht, dass mit dem gesamten stirnseitigen Bereich der Werkzeugschneiden des Werkzeuges gearbeitet werden kann. Um diesen Nachteil zu beseitigen, sind aus dem Stand der Technik sogenannte Walzenstirnfräser bekannt, welche zusätzlich zu ihrer Aufnahmebohrung eine Eindrehung aufweisen, die so tief gehalten ist, dass die Unterleg-/Andruckscheibe und der Schraubenkopf unterhalb der an die stirnseitigen Werkzeugschneiden gedachten Stirnfläche des Werkzeuges zu liegen kommen und somit mit dem stirnseitigen Bereich der Werkzeugschneiden gearbeitet werden kann, z.B. Herstellen einer Planfläche bzw. einer Vertiefung oder Nut, deren Seitenwände im Innenkantenbereich der Nut ohne Ein-/Freistich bis zur Grundfläche hinunter reichen. Diese Art der Problembehebung verursacht jedoch erhöhte Werkzeugkosten.

Ein weiterer Nachteil besteht bei den einteiligen Aufsteckfräsdornen noch darin, dass jedem Maschinenteil nur ein Werkzeugteil zugeordnet ist, damit ergibt sich für eine flexible Werkzeugausrüstung eines Fertigungsbetriebes, egal ob Lohnfertiger oder Funktionsmusterbau, und insbesondere bei Fertigungslosen mit geringer Stückzahl ein hoher Werkzeugaufwand.

Die Aufgabe der Erfindung besteht daher darin, einen Werkzeugdorn, insbesondere einen Fräs- oder Sägedorn zu entwickeln, welcher ein Werkzeugteil aufweist, mit dem Werkzeuge, die nur eine Durchgangsbohrung für ihre Aufnahme auf einem Werkzeugteil aufweisen, derart spannbar sind, dass die Nutzung der vollständigen Stirnfläche des Werkzeuges nicht von überstehenden Befestigungselementen behindert wird, und welcher positiv die Herstellungs- und Werkzeugkosten beeinflussen kann sowie zudem einen variableren Einsatz des Werkzeugdornes, bzw. des Fräs- oder Sägedornes, ermöglicht.

Die Aufgabe löst erfindungsgemäß ein Werkzeugdorn, insbesondere ein Fräs- oder Sägedorn gemäß dem Patentanspruch 1, welcher sich durch die kennzeichnenden Merkmale in seiner baulichen Ausgestaltung vom Stand der Technik abhebt; die nachgeordneten Patentansprüche 2 bis 14 offenbaren vorteilhafte Weiterbildungen bzw. bevorzugte Ausführungsvarianten des neu gestalteten Werkzeugdornes.

Der Kernpunkt der Erfindung besteht darin, dass der Werkzeugdorn, insbesondere der Fräs- oder Sägedorn zweiteilig ausgebildet ist, wobei das Werkzeugteil im Maschinenteil aufgenommen und mitsamt dem Werkzeug am Maschinenteil festsetzbar ist, wobei in spezieller Art zum Spannen des/der auf dem Werkzeugteil aufgenommenen Werkzeuge ein Anlagebund dient, der endseitig am Werkzeugteil vorgesehen ist und zudem eine von seiner Außenkante ausgehende, zum Werkzeugschaft des Werkzeugteiles hin geneigte Schräge aufweist, die an die regelmäßig im Kantenbereich zwischen Aufnahmebohrung und Stirnfläche eines Werkzeuges vorhandene Fase anliegt, und bei dem das Werkzeugteil mitsamt dem Werkzeug unter Einwirkung einer Zugkraft gegen eine werkzeugseitig liegende Planfläche des Maschinenteiles kraftschlüssig festgesetzt wird.
Zur Erhöhung der aufnehmbaren Schneidkräfte sind das Werkzeug mit dem Werkzeugschaft des Werkzeugteiles und das Werkzeugteil selbst mit der korrespondierenden Aufnahmebohrung des Maschinenteiles zusätzlich mittels einer Längsfeder formschlüssig verbunden. Statt der Längsfeder-Nut-Verbindung können auch stirnseitig angeordnete Querfeder-Nut-Verbindungen vorgesehen sein.

Eine Weiterung der Erfindung sieht zudem noch vor, dass der Schaft des Werkzeugteiles in einen Werkzeugschaft und einen Aufnahmeschaft, die axial nebeneinander liegen, unterteilt ist, wobei der Grenzbereich durch eine Markierungsrille gekennzeichnet ist. Hiermit wird einerseits dem Einrichter einer Werkzeugmaschine in einfacher Weise signalisiert, bis wohin Werkzeuge und eventuell notwendige Distanzhülsen, zur Überbrückung eines freien axialen Abstandes, auf den Werkzeugschaft des Werkzeugteiles aufsteckbar sind und welcher Teil des Werkzeugteiles, der sogenannte Aufnahmeschaft, für eine sichere Aufnahme im Maschinenteil freigehalten werden muss.

Die Erzeugung der für das kraftschlüssige Befestigen des Werkzeugteiles mitsamt dem aufgesteckten Werkzeug am Maschinenteil benötigten Kraft erfolgt mittels eines an sich bekannten Zugstangensystems, wobei die Zugstange in ein von der Stirnfläche des Aufnahmeschaftes zentrisch und axial in das Werkzeugteil eingearbeitetes Gewindeloch eingreift.

Bei der Übertragung großer Drehmomente vom Werkzeugteil auf das Werkzeug treten erhebliche Scherkräfte auf. Um das Verdrehen des Werkzeugs, relativ zum Werkzeugteil, bzw. die Beschädigung der Längsfeder und/oder der Längsnut zu verhindern, ist der Anlagebund am Werkzeugteil unterbrochen ausgeführt. Darunter ist im Sinne der Erfindung zu verstehen, dass in Umfangsrichtung gesehen die vom Außendurchmesser des Anlagebundes zum Außendurchmesser des Werkzeugschafts verlaufende Schräge nicht durchgehend verläuft. In der Schräge sind dadurch radiale Aussparungen ausgebildet. Dabei ist im Rahmen der Erfindung die Anzahl der Aussparungen frei wählbar. Insbesondere ist vorgeschlagen, dass sechs Aussparungen vorhanden sind. Die Innenfase des Werkzeugs ist zum Anlagebund komplementär ausgeformt, d.h. sie weist mehrere radial nach innen weisende Vorsprünge auf, die im wesentlichen formschlüssig in die Aussparungen eingreifen.

In einer Fortbildung der Erfindung ist der mit einer Schräge versehene Anlagebund mit zusätzlichen, radial nach außen weisenden Vorsprüngen ausgestattet, die ebenfalls mit einer geneigten Schräge ausstattbar sind, um ein Werkzeug kraftschlüssig am Werkzeugteil festzulegen. Dazu ist das Werkzeug, z.B. ein Scheibenfräser oder Sägeblatt, an seiner Innenfase mit Einbuchtungen versehen, in die die Vorsprünge des Anlagebundes eingreifen. Die Zahl der Vorsprünge ist frei wählbar, bevorzugt sind sechs Vorsprünge.
Anhand eines Ausführungsbeispieles, welches in den Zeichnungen schematisiert dargestellt ist, wird folgend die Erfindung näher erläutert.
Es zeigen:
- Fig. 1: einen Längsschnitt des Maschinenteiles des neuen Werkzeugdornes, der hier ein Fräsdorn ist;
- Fig. 2: in teilweisem Längsschnitt das Werkzeugteil des neuen Fräsdornes,
- Fig. 3: in teilweiser Schnittdarstellung den neuen Fräsdorn in einer Gesamtansicht, fertig montiert für eine Anwendung,
- Fig. 4 und 4a: ein weiteres Werkzeugteil mit speziellem Anlagebund im Längsschnitt entlang IV bis IV in Fig. 4a und Stirnansicht,
und
- Fig. 5 und 5a: ein Kreissägeblatt in Draufsicht und Querschnitt.

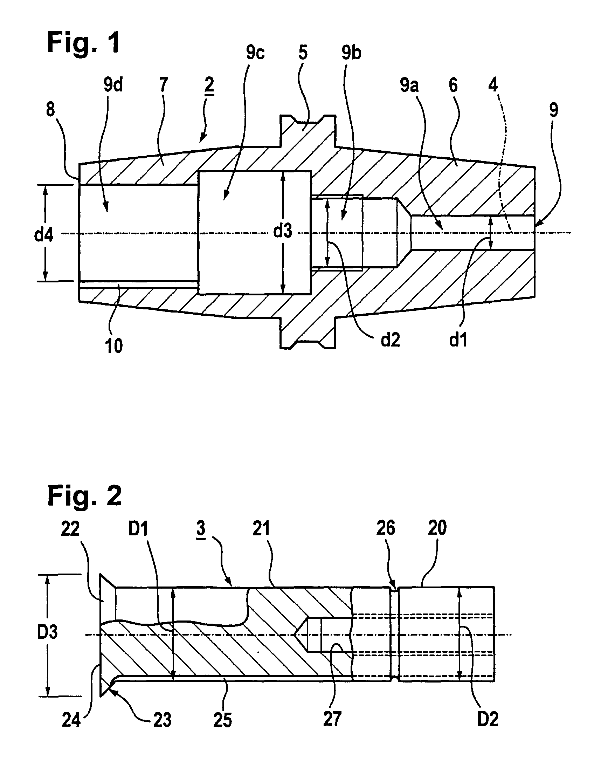

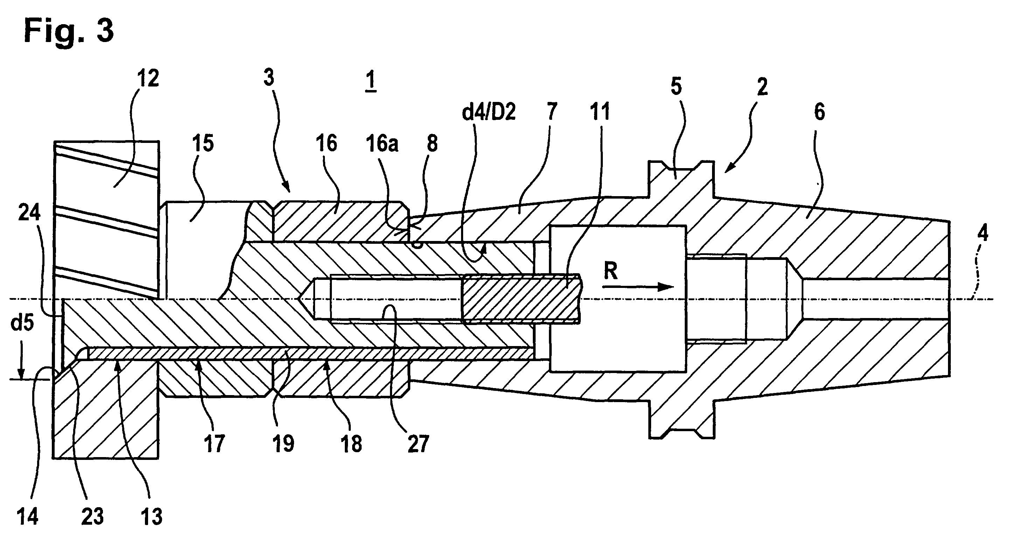

In Fig. 1 ist das Maschinenteil 2 des neuen Fräsdornes 1 gezeigt. Rotationssymmetrisch zur gemeinsamen Mittelachse 4 weist das Maschinenteil 2, von einem etwa mittig angeordneten Bund 5 ausgehend, auf seiner einen Seite einen Maschinenzapfen 6 auf, der vorzugsweise eine kegelförmige Oberfläche, insbesondere einen genormten Morsekegel, hat. Zur anderen Seite des Bundes 5 erstreckt sich ein Werkzeugzapfen 7, der vorzugsweise zu seiner endseitigen Stirnfläche hin konisch ausläuft; einerseits zur Reduzierung der Masse des Maschinenteiles 2 und andererseits um das Maschinenteil 2, insbesondere werkzeugseitig, bezüglich seiner äußeren Abmessungen möglichst klein zu halten.
Die Stirnseite des Werkzeugzapfens 7 ist als quer und rechtwinklig zur Mittelachse 4 liegende Planfläche 8 ausgebildet, welche als Anlagefläche für eine Stirnseite eines Werkzeuges 12 bzw. einer Hülsenstirnfläche 16a einer zwischengeschalteten Distanzhülse 16 dient, siehe Fig. 3. Das Maschinenteil 2 ist zudem von einer Durchgangsbohrung 9 zentrisch durchsetzt, welche mehrere Bereiche mit unterschiedlichen Durchmessern aufweist. Von der Stirnseite des Maschinenzapfens 6 ausgehend folgen in axialer Richtung nacheinander eine Durchführung 9a, ein Gewindebereich 9b (Innengewinde), ein Freiraum 9c und eine Aufnahmebohrung 9d, wobei letztere vorzugsweise in ihrem Durchmesser d4 einem genormten Durchmesser für Werkzeugaufnahmen entspricht.
Bei diesem gezeigten Ausführungsbeispiel ist in der Aufnahmebohrung 9d noch eine axial gerichtete Längsnut 10 vorgesehen. Die Innendurchmesser der Bereiche der Durchgangsbohrung 9 sind so gestaffelt, dass der Durchmesser d3 des Freiraumes 9c am größten ist, dann, von der Größe her abnehmend, der Durchmesser d4 der Aufnahmebohrung 9d folgt und der Durchmesser d2 des Gewindebereiches 9b kleiner ist als der Durchmesser d4; der Durchmesser d1 der Durchführung 9a ist in der Regel kleiner gehalten als der Durchmesser d2 des Gewindebereiches 9b.

Das ebenfalls zum neuen Fräsdorn gehörende Werkzeugteil 3 ist in der Fig. 2 schematisch dargestellt. Der aus einem Körper bestehende Schaft des Werkzeugteiles 3 ist in einen Aufnahmeschaft 20 und einen Werkzeugschaft 21 unterteilt, wobei der Grenzbereich zwischen beiden 20 und 21 vorzugsweise durch eine Markierungsrille 26 gekennzeichnet ist.
Der Endbereich des Werkzeugschaftes 21 geht in einen Anlagebund 22 über, welcher 22, von seinem Außendurchmesser D3 ausgehend, eine in Richtung Werkzeugschaft 21 geneigte Schräge 23 aufweist.
Von der Stirnseite des Aufnahmeschaftes 20 ausgehend, ist ein zentrisch liegendes und axial in den Körper des Werkzeugteiles 3 hineinragendes Gewindeloch 27 vorgesehen, in welches 27, im zusammengebauten Zustand des Fräsdornes 1, eine Zugstange 11 eingreifen kann.
In dem gezeigten und beschriebenen Ausführungsbeispiel sind der Außendurchmesser D1 des Werkzeugschaftes 21 und der Außendurchmesser D2 des Aufnahmeschaftes 20 gleich groß; dies ist hier aber ein spezieller Fall, es kann in der Praxis durchaus vorkommen und vorteilhaft sein, dass der Außendurchmesser D1 des Werkzeugschaftes 21 größer ist als der Außendurchmesser D2 des Aufnahmeschaftes 20.

Die Fig. 3 zeigt den neuen Fräsdorn 1, in einer teilweise geschnittenen Darstellung, in fertig montiertem Zustand, also einsatzfertig für die Aufnahme in einer nicht dargestellten Spindel einer Werkzeugmaschine.
Auf dem Werkzeugschaft 21 des Werkzeugteiles 3 ist in endseitiger Lage ein Werkzeug 12, hier ein Scheibenfräser, aufgesteckt.
Die regelmäßig im Kantenbereich zwischen Aufnahmebohrung und Stirnfläche des Werkzeuges 12 vorhandene, innen liegende Fase 14 liegt an der Schräge 23 des Anlagebundes 22 des Werkzeugteiles 3 an. Die Längsnut 13 in der Aufnahmebohrung des Scheibenfräsers 12 sitzt formschlüssig über der Längsfeder 19, die in der Längsnut 25 des Schaftes des Werkzeugteiles 2 angeordnet ist.
Der Aufnahmeschaft 20 sitzt in der Aufnahmebohrung 9d des Maschinenteiles 2, wobei deren Durchmesser, der Außendurchmesser D2 und der Innendurchmesser d4 aufeinander abgestimmt, als sogenannte Passungs-Durchmesser ausgeführt sind.
Da die Breite des Scheibenfräsers 12 geringer als die am Werkzeugschaft 21 zur Verfügung stehende Länge ist, wird im hier vorliegenden Beispiel der verbleibende Abstand mit Distanzhülsen 15 und 16 überbrückt.
Durch die in die Längsnuten 13, 17 und 18 formschlüssig eingreifende Längsfeder 19 sind das Werkzeug 12 sowie die Distanzhülsen 15, 16 auf dem Werkzeugschaft 21 gut für die Übertragung von Kräften arretiert. Gleiches gilt für die sichere Übertragung der besagten Kräfte vom Maschinenteil 2 auf das Werkzeugteil 3; die Längsfeder 19 greift in die Längsnut 10 der Aufnahmebohrung 9d formschlüssig ein.
Zur Erzeugung des Kraftschlusses des Werkzeuges 12 mit dem Werkzeugteil 3 und dem Maschinenteil 2, wird das Werkzeugteil 3 mitsamt dem aufgesteckten Werkzeug 12 und den Distanzhülsen 15, 16 unter Einwirkung einer Zugkraft "R" gegen eine werkzeugseitig liegende Planfläche 8 des Maschinenteiles 2 festgesetzt, wobei die Hülsenstirnfläche 16a der maschinenseitigen Distanzhülse 16 und die Planfläche 8 sowie die weiteren Stirnflächen der Distanzhülsen 15, 16 bzw. die aufnahmeseitig gerichtete Körperfläche des Scheibenfräsers 12 aneinander anliegen.

Für den Wechsel des Werkzeuges 12 gegen ein anderes Werkzeug 12 wird die Verbindung des Werkzeugteiles 3 mit dem Maschinenteil 2 gelöst, das Werkzeug 12 unter eventueller Zuordnung entsprechender Distanzhülsen 15, 16 ausgewechselt und sodann das Werkzeugteil 3 mitsamt dem Werkzeug 12 wieder mit dem Maschinenteil verbunden.

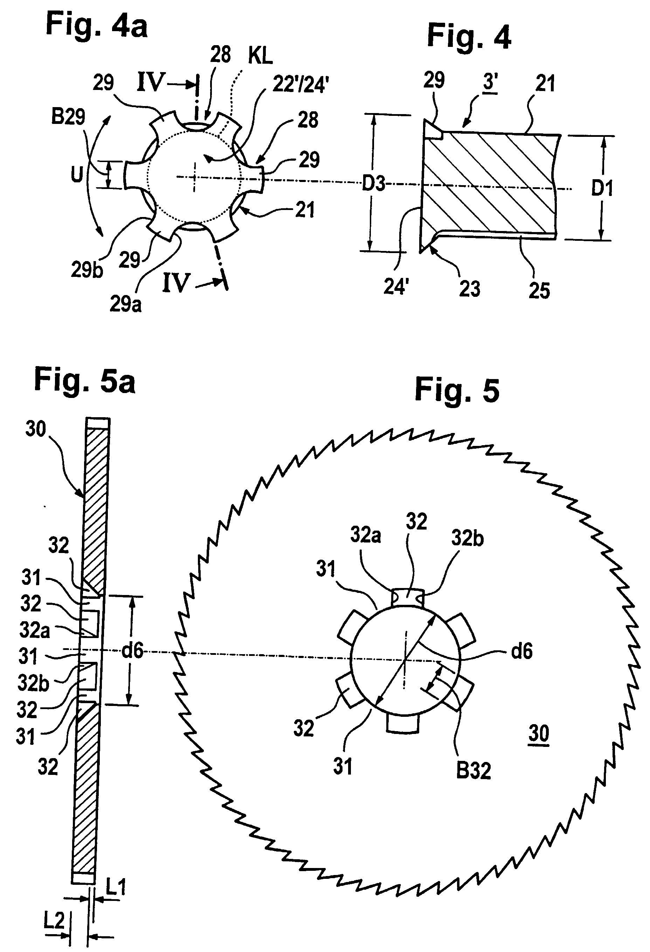

In der in Fig. 4a dargestellten Ansicht der Stirnseite 24' des Werkzeugteils 3 des Fräs- bzw. Sägedorns 1 ist die Ausgestaltung des Anlagebundes 22 in einer weiteren, speziellen Form 22' verdeutlicht. In Umfangsrichtung U gesehen sind am Umfang des Anlagebundes 22' mehrere Aussparungen 28 angebracht, so dass zwischen den Aussparungen 28 radial nach außen gerichtete Arme 29 ausgebildet sind, die ebenfalls mit einer Schräge 23 zwischen dem Außendurchmesser D3 und dem Außendurchmesser D1 des Werkzeugschaftes 21 ausgestattet sind. Die Aussparungen 28 sind hier derart tief in radialer Richtung vorgesehen, dass die gedachte Kreislinie KL einen geringeren Durchmesser hat als der Außendurchmesser D1 des Werkzeugschaftes, wie auch durch den Längsschnitt entlang IV -IV der Fig. 4a in Fig. 4 verdeutlicht. Die Breite B29 der Arme 29 in Umfangsrichtung U entspricht im wesentlichen der Breite B32 der Kerben 32 im Kreissägeblatt 30 aus Fig. 5. Damit greifen die Arme 29 mit geringstem Spiel zwischen den beiden Bauteilen in die Kerben 32 ein und verhindern die relative Verdrehung des Kreissägeblattes 30 relativ zum Werkzeugteil 3. Dazu ist auch der Innendurchmesser d6 geringfügig größer als der Außendurchmesser D1 gewählt, um das Werkzeugteil 3 in das Kreissägeblatt 30 einschieben zu können.

Vorzugsweise wird mit einem derartigen Anlagebund 22' ein Kreissägeblatt 30 am Sägedorn 1 befestigt, es sind aber auch beliebige andere Werkzeuge befestigbar. Die Innenfase 14 ist mit Vorsprüngen 31, vorzugsweise sechs, ausgestattet, wie in Fig. 5 dargestellt, die in die Aussparungen 28 eingreifen. Die Vorsprünge 31 sind nicht notwendigerweise mit einer Fase versehen, lediglich die Kerben 32 zwischen ihnen. Die Flanken 32a, b der Kerben 32 liegen dabei praktisch unmittelbar und praktisch ohne Spiel an den Flanken 29a, b der Arme 29 des Anlagebundes 22' an, um die Drehbewegung des Werkzeugteils 3 auf das Kreissägeblatt 30 zu übertragen.

Wie in der Querschnittsdarstellung in Fig. 5a verdeutlicht, durchgreifen die Kerben 32 das Kreissägeblatt 30 nicht vollständig. Sie sind lediglich in einer Tiefe L2 ausgeführt, die geringer ist als die gesamte Dicke L1 + L2 des Kreissägeblattes 30, um die Fertigung zu vereinfachen. Die Kerben 32 sind angeschrägt, damit die Schräge 23 bzw. die Arme 29 des Anlagebundes 22' des Werkzeugteils 3 im wesentlichen passgenau an den Flanken 32a, b sowie der geneigten Fläche der Kerben 32 zum Anliegen kommt.

Alle in der voranstehenden Beschreibung erwähnten sowie auch die nur aus den Zeichnungen entnehmbaren Merkmale sind weitere Bestandteile der Erfindung, auch wenn sie nicht besonders hervorgehoben und insbesondere nicht in den Ansprüchen erwähnt sind.

Die Erfindung beschränkt sich zudem nicht auf die gezeigte Ausführungsvariante, vielmehr sind insbesondere in ihrer äußeren Form voneinander sehr verschiedene Maschinenteile möglich. Weiterhin kann auch ein modifiziertes Zugstangenspannsystem eingesetzt werden, bei dem ein im Gewindebereich des Maschinenteiles positionierbares, bis in den inneren Freiraum des Maschinenteiles hineinragendes Gewindezwischenstück vorgesehen ist, so dass das besagte Spannsystem zweiteilig ist und somit das Spannen des Maschinenteiles in der Spindel einer Werkzeugmaschine unabhängig vom Spannen des Werkzeugteiles und umgekehrt erfolgen kann.

Der neue, mehrteilige Werkzeugdorn, insbesondere Fräs- oder Sägedorn 1 ist zudem hervorragend für die Zusammenstellung eines sogenannten Werkzeugsatzes geeignet, wobei für den Außendurchmesser D1 des Werkzeugschaftes 21 die Nenngrößen 16, 22, 27, 32, 40 und 50 sowie als Längenstufung für den Werkzeugschaft 21 die Längen 40 mm (0-40), 80 mm (40-80) und 120 mm (80-120) vorgesehen, jedoch nicht auf diese Stufung beschränkt sind. Die Länge des Aufnahmeschaftes 20 des Werkzeugteiles 3 ist vorzugsweise auf 30 mm bestimmt.

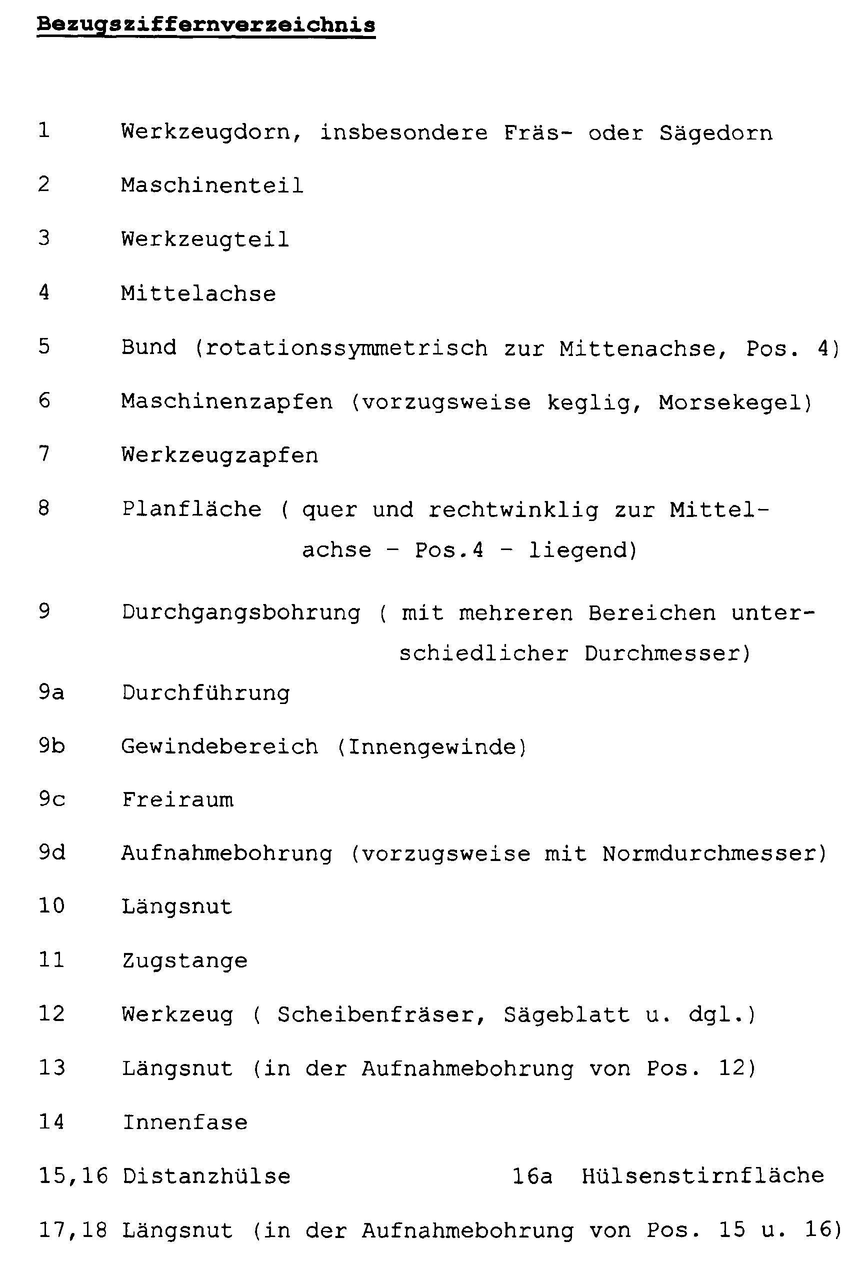

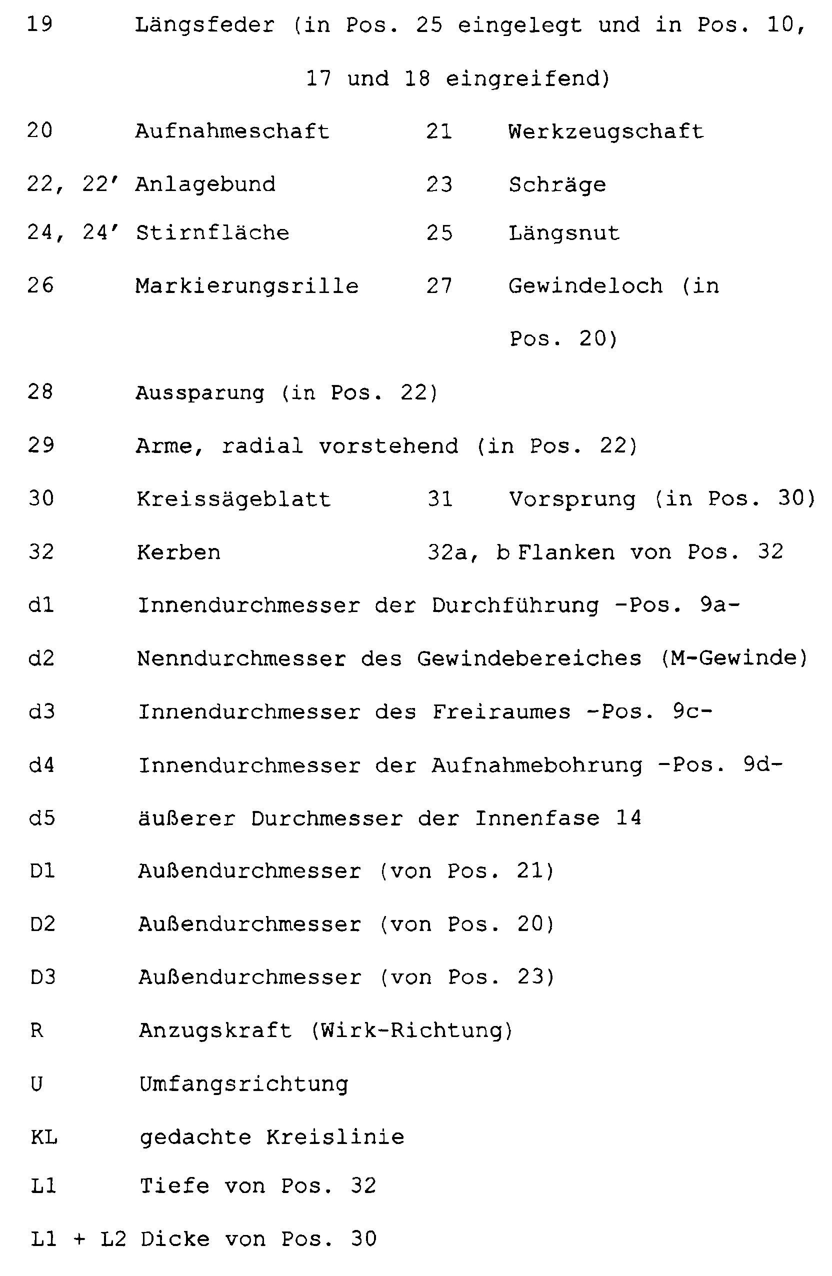

## Patentansprüche

1. Werkzeugdorn, insbesondere Fräs- oder Sägedorn, der ein Maschinenteil (2), zu seiner Aufnahme in einer Spindel einer Werkzeugmaschine, und ein Werkzeugteil (3), zur Aufnahme und Befestigung eines wahlweise aufsteckbaren Werkzeuges (12), aufweist, welche (2 und 3) bezüglich einer gemeinsamen Mittelachse (4) rotationssymmetrisch angeordnet sind,
*dadurch gekennzeichnet*,
dass die den Werkzeugdorn (1) bildenden Teile, das Maschinenteil (2) und das Werkzeugteil (3), voneinander trennbar sind.

2. Werkzeugdorn nach Anspruch 1,
*dadurch gekennzeichnet*,
dass das Werkzeugteil (3) in das Maschinenteil (2) einsteck- und befestigbar ist, wobei jedes Teil (2, 3) mit zueinander korrespondierenden Verbindungsbereichen ausgestattet ist.

3. Werkzeugdorn nach Anspruch 1,
*dadurch gekennzeichnet*,
dass das Werkzeugteil (3) an dem Maschinenteil (2) aufsteck- und befestigbar ist, wobei jedes Teil (2, 3) mit zueinander korrespondierenden Verbindungsbereichen ausgestattet ist.

4. Werkzeugdorn nach Anspruch 2 oder 3,
*dadurch gekennzeichnet*,
dass dem Maschinenteil (2) Mittel zur Erzeugung einer Zugkraft zugeordnet sind, mit denen das Werkzeugteil (3) kraftschlüssig an dem Maschinenteil (2) befestigbar ist.

5. Werkzeugdorn nach Anspruch 2, 3 oder 4,
*dadurch gekennzeichnet*,
dass dem Werkzeugteil (3) Formschluss erzeugende Mittel zugeordnet sind, die in das Maschinenteil (2) lösbar eingreifen.

6. Werkzeugdorn nach Anspruch 4 oder 5,
*dadurch gekennzeichnet*,
dass das Maschinenteil (2) von einem Bund (5) ausgehend maschinenseitig einen Maschinenzapfen (6) und werkzeugseitig einen Werkzeugzapfen (7) besitzt, wobei die Stirnfläche des Werkzeugzapfens (7) eine quer und rechtwinklig zur Mittelachse (4) liegende Planfläche (8) ist, und eine zentrische Durchgangsbohrung (9) aufweist, die mehrere Bereiche mit zueinander unterschiedlichen Durchmessern enthält.

7. Werkzeugdorn nach einem der Ansprüche 1 bis 6,
*dadurch gekennzeichnet*,
dass das Werkzeugteil (3) einen Aufnahmeschaft (20) und einen Werkzeugschaft (21) besitzt, wobei der Werkzeugschaft (21) endseitig von einem Anlagebund (22) begrenzt wird.

8. Werkzeugdorn nach Anspruch 7,
*dadurch gekennzeichnet*,
dass der Anlagebund (22) eine von seinem Außendurchmesser (D3) ausgehende, zum Außendurchmesser (D1) des Werkzeugschaftes (21) hin geneigte und in letzteren übergehende Schräge (23) besitzt.

9. Werkzeugdorn nach Anspruch 7 oder 8,
*dadurch gekennzeichnet*,
dass der Außendurchmesser (D3) des Anlagebundes (22) kleiner ist als der äußere Durchmesser der Innenfase (14).

10. Werkzeugdorn nach einem der Ansprüche 7 bis 9,
*dadurch gekennzeichnet*,
dass der Anlagebund (22), in Umfangsrichtung (U) des Werkzeugdornes (1) gesehen, auf dem Umfang des Anlagebundes (22), mindestens eine radial nach innen weisende Aussparung (28) aufweist.

11. Werkzeugdorn nach Anspruch 10,
*dadurch gekennzeichnet*,
dass drei oder sechs Aussparungen (28) vorgesehen sind.

12. Werkzeugdorn nach einem der Ansprüche 7 bis 9,
*dadurch gekennzeichnet*,
dass der Anlagebund (22') mindestens einen, radial nach außen weisenden Vorsprung aufweist.

13. Werkzeugdorn nach Anspruch 11,
*dadurch gekennzeichnet*,
dass die Vorsprünge mit einer zur Schräge (23) parallelen Anlagefläche ausgestattet sind.

14. Werkzeugdorn nach Anspruch 12 oder 13,
*dadurch gekennzeichnet*,
dass der Anlagebund (22') drei oder sechs Vorsprünge aufweist.
